# EUROPÄISCHE PATENTSCHRIFT

(11) **EP 1 644 706 B1**
(45) Veröffentlichungstag und Bekanntmachung des Hinweises auf die Patenterteilung: **22.02.2017**
(21) Anmeldenummer: 04740744.0
(22) Anmeldetag: 07.07.2004
(51) Int. Cl.: G01F 1/84, F16C 11/12, G01F 1/80, F16D 3/00, G06K 7/10

(54) **KREUZFEDERELEMENT**
CRUCIFORM SPRING ELEMENT
ELEMENT A LAMES FLEXIBLES CROISEES

(30) Priorität: 08.07.2003 DE 10330947
(43) Veröffentlichungstag der Anmeldung: 12.04.2006
(73) Patentinhaber: Schenck Process Europe GmbH, 64293 Darmstadt (DE)
(72) Erfinder: KAHLE, Jens, 63303 Dreieich (DE); WEINAND, Robert, 64283 Darmstadt (DE)
(74) Vertreter: Ellspermann, Ina
(86) Internationale Anmeldenummer: PCT/EP2004/007431
(87) Internationale Veröffentlichungsnummer: WO 2005/005934

(56) Entgegenhaltungen:
- EP-A- 0 671 698
- WO-A-00/47955
- US-A- 4 261 211
- PATENT ABSTRACTS OF JAPAN Bd. 2000, Nr. 21, 3. August 2001 (2001-08-03) & JP 2001 119089 A (USHIO SOGO GIJUTSU KENKYUSHO:KK), 27. April 2001 (2001-04-27)

## Beschreibung

Die Erfindung betrifft ein Kreuzfederelement gemäß dem Oberbegriff des Patentanspruchs 1.

Zur genauen Messung von Drehmomenten ist es meist erforderlich, zwei Bauteile relativ zueinander drehbar zu lagern. Insbesondere bei kleinen Drehmomenten ist es für die Meßgenauigkeit entscheidend, eine möglichst reibungsfreie Lagerung vorzusehen. Verhältnismäßig kleine Drehmomente werden insbesondere bei der Messung des Massenstroms nach dem Coriolis-Meßprinzip genutzt. Bei derartigen Meßgeräten wird ein Motor mit konstanter Drehzahl angetrieben, der ein Flügelrad in Rotation versetzt, auf das der Materialstrom aufgegeben und radial umgeleitet wird. Durch eine Drehmomentmeßeinrichtung wird das Antriebsdrehmoment gemessen, dessen Größe proportional zum Massenstrom ist.

Eine Meßvorrichtung zur kontinuierlichen Gewichtserfassung von Materialströmen ist aus der DE-OS 33 46 145 vorbekannt. Bei dieser Meßvorrichtung wird das Antriebsdrehmoment des Motors, der pendelnd aufgehängt ist und sich auf einem mit dem Gehäuse verbundenen Kraftaufnehmer abstützt, gemessen. Die aufgenommene Kraft wird unter Berücksichtigung des Hebelarms in ein Drehmoment umgerechnet, was genau dem Massendurchsatz proportional ist. Bei dieser Vorrichtung ist der pendelnd aufgehängte Motor gegenüber dem stationären Gehäuse in Kugellagern geführt, die durch ihre Reibung die Drehmomentmessung verfälschen können. Diese ist auch nicht vorherbestimmbar, da im Lastbetrieb durch einen einseitig abgestützten Motor teilweise unterschiedliche Lagerreibungen auftreten, die dann das Meßergebnis verfälschen.

Aus der EP 0 474 121 B1 ist ebenfalls eine Vorrichtung zur Messung des Massenstroms nach dem Coriolis-Prinzip bekannt, bei der das Antriebsdrehmoment durch ein Meßgetriebe ermittelt wird, das diese Lagerreibungskräfte weitgehend kompensieren soll. Dazu ist die angetriebene Meßwelle des Flügelrades in einem Wälzlager geführt, dessen Außenring in einem weiteren Wälzlager gelagert ist. Dabei ist der Außenring des zweiten Wälzlagers mit einem zusätzlichen Antrieb versehen, der das zweite Wälzlager mindestens mit der synchronen Drehzahl der Meßwelle umlaufen läßt. Da bei unterschiedlichen Antriebsdrehmomenten zwischen den beiden Wälzlagern eine Relativbewegung in Drehrichtung entsteht, die ein sogenanntes Abrißmoment erfordert, ist ein nicht linearer Reibungseinfluß auf die Drehmomentmessung nicht vollständig zu verhindern.

Aus der WO 00/47955 ist eine Drehmomentmeßvorrichtung für eine Meßvorrichtung des Massenstroms nach dem Coriolis-Meßprinzip bekannt, die das Antriebsdrehmoment über ein Drehlagerelement überträgt, das ein reibungsfreies Kreuzfederelement enthält. Dieses Kreuzfederelement besteht aus zwei sich orthogonal kreuzenden Blattfedern, die zwei Lagerelemente miteinander verbinden. Eines der Lagerelemente ist eine senkrecht nach unten gerichtete Lagerhülse, in dessen Hohlraum ein senkrecht nach oben gerichteter Zylinder als zweites Lagerelement geführt ist. In axialer Richtung sind beide Lagerelemente durch eine Kugel drehbar gelagert, deren Reibung vernachläßigbar ist. Zur radialen Lagerung sind die Blattfedern senkrecht zur Drehachse angeordnet und mit ihrem einen Ende an der Lagerhülse und dem anderen Ende an dem unteren Zylinder befestigt. In axialer Richtung zur Drehachse sind die sich kreuzenden Blattfedern beabstandet nebeneinander vorgesehen und durch eine Aussparung im unteren Zylinder geführt, durch die eine geringe Drehbewegung der beiden Lagerelemente relativ zueinander ermöglicht wird. Dieses Drehlager ist weitgehend reibungsfrei und in Drehrichtung biegeweich und in radialer Richtung biegesteif ausgebildet. Ein derartiges Kreuzfederelement hat jedoch den Nachteil, daß insbesondere bei einer umlaufenden radialen Belastung die Gefahr besteht, daß sich die Federcharakteristik je nach Vorzeichen der Spannung in den Blattfedern sprunghaft ändert, was zu großen Knickbelastungen führt und eine unerwünschte Änderung der Federrate in Drehrichtung bewirkt.

Der Erfindung liegt deshalb die Aufgabe zugrunde, ein derartiges Federelement so weiterzuentwickeln, daß es bei einer radialen Belastung in Drehrichtung biegeweich und in radialer Richtung möglichst biegehart ist und dessen Federrate in Drehrichtung weitgehend unabhängig von der radialen Belastung ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die paarweise Anordnung der Blattfederelemente diese in radialer Richtung besonders flach und damit sehr elastisch in Biegerichtung ausgelegt werden können. Hierdurch wird vorteilhafterweise die Hysterese der Blattfederelemente klein gehalten, obwohl dieses Kreuzfederelement hohen Radialbelastungen standhält und kaum eine Knickgefahr besteht.

Ein derartig elastisches Kreuzfederelement hat weiterhin den Vorteil, daß es sich hervorragend zur Kraft- oder Drehmomentmessung bei pendelnd aufgehängten Antriebsmotoren eignet, da bei diesen nur geringe Drehbewegungen übertragen werden müssen. Da diese Lagerungen auch im Meßzweig angeordnet werden können, ist mit einem derartigen einfachen Kreuzfederelement eine reibungsfreie Lagerung möglich, die keinen verfälschenden Einfluß auf das Meßergebnis besitzt.

Die Erfindung hat auch weiterhin den Vorteil, daß ein derartiges Kreuzfederelement weitgehend verschleißfrei arbeitet und deshalb nur wenig Wartungsaufwand erfordert. Denn durch die Verbindung der Lagerelemente durch mindestens zwei Blattfederpaare wird eine punktförmige Belastung in den Lagerelementen vermieden, die insbesondere bei den geringen Drehbewegungen und vibrierenden Radialbelastungen an Kugellagern zu erhöhtem Verschleiß und Reibung führt.

Darüber hinaus hat die Erfindung noch den Vorteil, daß sie über eine hohe Nullpunktkonstanz im Leerlaufbetrieb auch bei einem rotatorisch umlaufenden Kreuzfederelement verfügt. Insbesondere auch dann, wenn dieses über radiale Antriebsvorrichtungen verfügt, denn durch die umlaufend stets gleichmäßig auf Zug und Druck beanspruchten Kreuzfederelemente ergeben sich kaum radiale Auslenkungen, die zu Meßsignalschwankungen führen können. Im übrigen ist mit einem derartigen Kreuzfederelement gleichzeitig eine hochgenaue Kraft- bzw. Drehmomentmessung vorteilhafterweise auch bei starken Temperaturschwankungen möglich. Denn durch die abwechselnde Befestigung der Blattfederelemente an den beiden Lagerelementen gleichen sich insbesondere Wärmeausdehnungswirkungen sowie thermische Verspannungen symmetrisch zur Drehachse aus, so daß sie nur einen vernachlässigbaren Einfluß auf die Meßvorrichtung haben.

Die Erfindung wird anhand eines Ausführungsbeispiels, das in der Zeichnung dargestellt ist, näher erläutert. Es zeigen:
- Fig. 1:: eine schematische Darstellung der prinzipiellen Anordnung eines Kreuzfederelementes, und
- Fig. 2:: eine konstruktive Ausgestaltung eines Kreuzfederelementes.

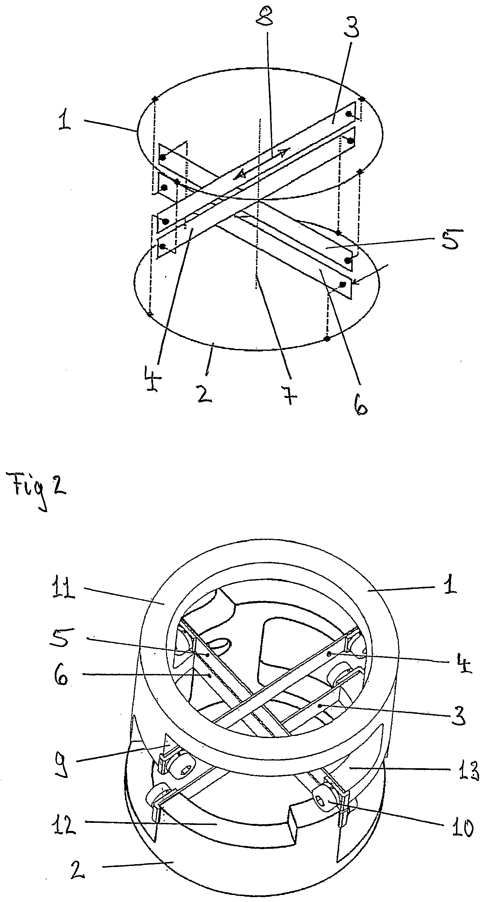

In Fig. 1 der Zeichnung ist ein Kreuzfederelement für eine Massenstrommeßvorrichtung nach dem Coriolis-Prinzip schematisch dargestellt, die aus vier sich paarweise kreuzenden Blattfedern 3, 4, 5, 6 besteht, die an zwei ringförmigen Lagerelementen 1, 2 befestigt sind.

Das Kreuzfedergelenk ist insbesondere vorgesehen, um eine in einer nicht dargestellte Hülse gelagerten Antriebsachse eines Flügelrades mit einer pendelnd gelagerten Kraftmeßvorrichtung zu verbinden. Eine derartige Vorrichtung ist in der am 13.11.2002 beim Deutschen Patent- und Markenamt unter dem Aktenzeichen 102 53 078.5-52 eingereichten Patentanmeldung offenbart. Dabei stützt sich die Kraftmeßvorrichtung über ein Zwischengetriebe auf einen Antriebsmotor ab. Dazu sind beide Lagerelemente 1, 2 mit jeweils einem Zahnrad verbunden, die mit zwei gleichartigen Zwischenzahnrädern kämmend umlaufen und die synchron von einem Antriebsmotor angetrieben werden. Dabei ist eines der Zwischenzahnräder mit einem Hebelarm verbunden, der sich auf eine Kraftmeßzelle abstützt und durch die das Antriebsmoment gemessen wird. Bei Antriebsmomentschwankungen entsteht zwischen den beiden Zwischenzahnrädern an den Lagerelementen ein Schlupf bzw. eine Relativbewegung, dessen Drehwinkel proportional dem Massenstrom ist. Diese Drehwinkel sind auch bei größeren Hebelarmübersetzungen sehr gering und betragen meist nicht mehr als 5° und sollen bei einer Verdrehung der Lagerelemente möglichst reibungsarm sein, da sich dieses Kreuzfederelement unmittelbar im Meßzweig befindet.

Wegen der geringen Coriolis-Kräfte gegenüber anderen Kräften in diesem Antriebszweig würde jede Lagerreibung das Meßsignal schwächen und wegen nichtlinearer Effekte auch verfälschen. Da das Kreuzfederelement von zwei sich kämmenden Zahnrädern radial angetrieben wird, entstehen bei der Übertragung des Antriebsmoments nicht unbeachtliche Radialkräfte, die von dem rotierenden Federelement aufgenommen werden müssen. Bei einer radialen Auslenkung hätte dies unmittelbar Einfluß auf den Meßwert, da sich das zu ermittelnde Drehmoment aus einer vorgegebenen Länge des Hebelarms ergibt, der sich auf die Kraftmeßzelle abstützt. Bei einer seitlichen Auslenkung würde sich diese Hebelarmlänge verändern, wodurch ein Meßfehler entsteht.

Bei einer derartigen Radialkraftbelastung insbesondere bei umlaufenden Kreuzfederelementen entstehen je nach Umlaufwinkellage der Blattfedern 3, 4, 5, 6 in dessen axialer Richtung sowohl eine Zug- als auch eine Druckbelastung. Insbesondere bei den Druckbelastungen müßten zur Verhinderung von Knickbewegungen in den Blattfedern 3, 4, 5, 6 diese so groß dimensioniert sein, daß dadurch deren Biegeweichheit in Drehrichtung leidet.

Das erfindungsgemäße Kreuzfederelement ist deshalb so ausgebildet, daß es bei jeder Winkellage in Drehrichtung möglichst biegeweich und in radialer Richtung insgesamt biegehart ist, ohne daß die Gefahr einer radialen Auslenkung besteht, auch wenn größere Radialkraftbelastungen auftreten. Dies erreicht die Erfindung vorzugsweise dadurch, daß die kreuzenden Blattfedern 3, 4, 5, 6 einer Radialrichtung 8 paarweise angeordnet sind, wobei die Enden jeweils an verschiedenen Lagerelementen 1, 2 befestigt werden. So ist die erste 3 und zweite Blattfeder 4 im oberen Teil der Zeichnung quer zur Drehachse 7 angeordnet. Dabei sind beide in axialer Richtung zur Drehachse 7 parallel nebeneinander vorgesehen, wobei die erste Blattfeder 3 mit ihrem einen Ende am oberen ringförmigen Lagerelement 1 und mit dem anderen Ende am unteren ringförmigen Lagerelement 2 befestigt ist. Hingegen ist die zweite Blattfeder 4 dieser paarweise angeordneten Blattfedern mit ihren Enden umgekehrt an den Lagerelementen 1, 2 befestigt, so daß dessen linker Endbereich mit dem oberen ringförmigen Lagerelement 1 und dessen rechter Endbereich mit dem unteren ringförmigen Lagerelement 2 verbunden ist. Diese beiden Blattfedern 3, 4 werden im unteren Zeichnungsbereich von einem weiteren Blattfederpaar 5, 6 orthogonal auf der Drehachse 7 gekreuzt. Dabei sind aber alle Blattfedern 3, 4, 5, 6 in axialer Richtung zur Drehachse 7 beabstandet angeordnet, wobei das untere Blattfederpaar 5, 6 in einer Richtung quer zur Drehachse 7 parallel nebeneinander verläuft. Die dritte untere Blattfeder 5 ist dabei mit ihrem linken Endbereich an dem unteren ringförmigen Lagerelement 2 und mit dem rechten Endbereich an dem oberen ringförmigen Lagerelement 1 befestigt. Hingegen ist die vierte untere Blattfeder 6 mit dem linken Endbereich am oberen ringförmigen Lagerelement 1 und mit dem rechten Endbereich am unteren ringförmigen Lagerelement 2 angebracht.

Durch den radialen Antrieb als auch durch eine pendelnde Motor- oder Zwischengetriebelagerung werden unterschiedliche Radialbelastungen in das Kreuzfederelement eingeleitet, die sowohl eine Druck- als auch eine Zugwirkung auf die Blattfedern 3, 4, 5, 6 ausüben können. Bei einem rotatorisch betriebenen Kreuzfederelement ändert sich dies auch schon durch die jeweilige Winkellage zur Krafteinleitungsstelle. Da derartige Blattfedern 3, 4, 5, 6 konstruktionsbedingt weitaus höheren Zugbelastungen als Druckbelastungen standhalten, sind diese erfindungsgemäß paarweise angeordnet und wechselseitig an den beiden Lagerelementen 1, 2, die als Lagerringe ausgebildet sind, befestigt. Dadurch werden die Blattfedern 3, 4, 5, 6 eines Federpaares 3, 4; 5, 6 im Wechsel sowohl mit radialen Zugals auch Druckkräften belastet, so daß jede Feder 3, 4, 5, 6 vorzugsweise besonders flach und damit in Drehrichtung sehr biegeweich ausgeführt werden kann. Da diese wechselseitigen Befestigungen auch an dem unteren kreuzweise angeordneten Blattfederpaar 5, 6 vorgesehen ist, entsteht auch bei einer Rotation eine gleichmäßige Radialkraftverteilung, wodurch eine stabile Radialkraftlagerung gewährleistet ist.

Ein derartiges Kreuzfederelement ist nicht nur in rotierenden Meßzweigen einsetzbar, sondern kann auch direkt an einem pendelnd aufgehängten Antriebsmotor vorgesehen werden. Dabei ist dann ein Lagerring 1 mit dem Stator des Antriebsmotors und der andere Lagerring 2 mit einem stationären Geräteteil verbunden, auf den sich die Kraftmeßvorrichtung abstützt.

Ein bevorzugtes Ausführungsbeispiel eines derartigen Kreuzfederelements ist in Fig. 2 der Zeichnung in konstruktiver Ausgestaltung dargestellt. Dabei sind die funktionsgleichen Bauteile mit den selben Bezugszeichen versehen wie in Fig. 1 der Zeichnung. Dieses Ausführungsbeispiel in Fig. 2 der Zeichnung besteht aus zwei Lagerelementen 1, 2, die als strukturierte Ringelemente ausgebildet sind. Dabei sind beide Ringelemente 1, 2 in axialer Richtung durch Aussparungen und Schlitze gegeneinander verdrehbar beabstandet. Im Gegensatz zur schematischen Darstellung nach Fig. 1 der Zeichnung sind die Federpaare 3, 4; 5, 6 einer Querrichtung 8 nicht direkt nebeneinander, sondern in einem Fall durch das kreuzende Blattfederpaar der anderen Querrichtung 8 getrennt.

Die Ringelemente 1, 2 erstrecken sich in axialer Richtung durch Vorsprünge und Aussparungen 13 gegen- und ineinander, wobei die Zwischenräume so vorgesehen sind, daß auch bei einem maximalen Drehwinkel eine Berührung ausgeschlossen ist. Dabei besitzen die Vorsprünge axiale Flächen 9, die radial angeordnet sind und zur Befestigung der Blattfederendbereiche dienen. Die Blattfedern 3, 4, 5, 6 sind durch eine Schraubverbindung 10 an den Ringelementen 1, 2 befestigt. Die Blattfedern 3, 4, 5, 6 bestehen aus flachen und dünnen Federwerkstoff vorzugsweise einer Federstahllegierung, die eine hohe Zugfestigkeit aufweist. Die Ringelemente 1, 2 bestehen vorzugsweise aus einem festen Metallkörper, der durch eine spanende Bearbeitung aus einem Rohrmaterial herausgearbeitet oder als Gußteil hergestellt wird.

Jedes der beiden Ringelemente 1, 2 kann noch mit Befestigungsmittel an den Verbindungsrändern 11 versehen werden, so daß es beispielsweise mit Zahnrädern, Drehachsen, Hülsen und anderen Verdrehelementen verbindbar ist, die gegeneinander verdrehbar angeordnet werden sollen. Das dargestellte Kreuzfederelement ist vorzugsweise für eine Massenstrommeßvorrichtung nach dem Coriolis-Prinzip vorgesehen. Derartige Kreuzfederelemente sind aber auch bei anderen Drehmomentmeßvorrichtungen einsetzbar, bei denen beispielsweise das Drehmoment einer Welle, eines Motors und dergleichen mit einer sich abstützenden Kraftmeßvorrichtung bestimmt werden soll.

## Patentansprüche

1. Kreuzfederelement bestehend aus zwei gegeneinander verdrehbaren Lagerelementen und mindestens zwei sich quer zu einer Drehachse (7) kreuzenden Blattfederelementen (3, 4, 5, 6), die die beiden Lagerelemente (1, 2) miteinander verbinden,
**dadurch gekennzeichnet, dass**
- die Lagerelemente (1, 2) als strukturierte Ringelemente ausgebildet sind und
- mindestens zwei Blattfederpaare (3,4: 5,6) vorhanden sind,wobei die Blattfederelemente (3, 4, 5, 6) einer jeweiligen radialen Richtung (8) mindestens paarweise angeordnet sind,
- wobei die Enden eines jeden Blattfederpaares (3, 4: 5, 6) einer Seite jeweils an unterschiedlichen Lagerelementen (1, 2) befestigt werden und dies im Wechsel mit der gegenüberliegenden Seite, derart dass jeweils die obere Blattfeder (3, 5) eines Blattfederpaares mit ihrem rechten Ende an dem oberen Lagerelement(1) und mit dem linken Ende an dem unteren Lagerelement (2) und die untere Blattfeder (4, 6) mit ihrem rechten Ende an dem unteren Lagerelement (2) und mit ihrem linken Ende am oberen Lagerelement (1) befestigt ist.

2. Kreuzfederelement nach Anspruch 1, **dadurch gekennzeichnet, dass** die ringförmigen Lagerelemente (1, 2) einen nach außen gerichteten ebenen Verbindungsrand (11) zur Befestigung des Verdrehelements aufweisen und einen nach innen gestuften mit Vorsprüngen und Aussparungen (13) versehenen Innenteil (12) besitzen, die in das gegenüberliegende Lagerelement (1, 2) eingreifen und mindestens axiale Flächen (9) zur Befestigung der Blattfederenden besitzen.

3. Kreuzfederelement nach einem der vorhergehenden Ansprüche, **dadurch gekennzeichnet, dass** die ringförmigen Lagerelemente (1, 2) durch Aussparungen (13) oder Schlitze axial voneinander beabstandet sind und mindestens einen Verdrehwinkel von 5° bis zu 45° zulassen und durch flache dünne Blattfedern (3, 4, 5, 6) verbunden sind, wobei die Blattfedern (3, 4, 5, 6) in Drehrichtung biegeweich und in Zugrichtung biegehart sind.

4. Kreuzfederelement nach einem der vorhergehenden Ansprüche, **dadurch gekennzeichnet, dass** die ringförmigen Lagerelemente (1, 2) Befestigungsmittel aufweisen, mit dessen Hilfe dieses zwischen einem Antriebsaggregat und einem Kraftaufnehmer drehbar gelagert ist und zur reibungsfreien Übertragung des zu messenden Antriebsmoments dient.

5. Kreuzfederelement nach Anspruch 4, **dadurch gekennzeichnet, dass** dieses zwischen einer Antriebswelle eines Flügelrades und eines Kraftaufnehmers einer Schüttgutmassenstrommessvorrichtung nach dem Coriolis-Prinzip angeordnet ist.

## Claims

1. Cruciform spring element consisting of two bearing elements which can be rotated relative to one another and at least two leaf spring elements (3, 4, 5, 6) that cross one another transversely to an axis of rotation (7), which connect the two bearing elements (1, 2) with one another,
**characterized in that**
- the bearing elements (1, 2) are designed as structured ring elements, and
- there are at least two leaf spring pairs (3, 4: 5, 6), wherein the leaf spring elements (3, 4, 5, 6) are arranged at least in pairs in a respective radial direction (8),
- wherein the ends of each leaf spring pair (3, 4: 5, 6) of one side are each fixed on different bearing elements (1, 2) and this in alternation with the opposite side, such that in each case the upper leaf spring (3, 5) of a leaf spring pair is fixed with its right end on the upper bearing element (1) and with its left end on the lower bearing element (2), and the lower leaf spring (4, 6) is fixed with its right end on the lower bearing element (2) and with its left end on the upper bearing element (1).

2. Cruciform spring element according to claim 1, **characterized in that** the annular bearing elements (1, 2) have an outwardly directed planar connecting edge (11) for fastening of the twisting element and having an inner core (12) provided with internally staggered projections and recesses (13), which enrage in the opposing bearing element (1, 2) and which have at least axial surfaces (9) for fastening the ends of the leaf springs.

3. Cruciform spring element according to any one of the preceding claims, **characterized in that** the annular bearing elements (1, 2) are axially spaced apart from one another by recesses (13) or slots and allow at least a twisting angle from 5° up to 45° and are connected by flat thin leaf springs (3, 4, 5, 6), wherein the leaf springs (3, 4, 5, 6) are flexurally pliable in the direction of rotation and are flexurally hard in the pulling direction.

4. Cruciform spring element according to any one of the preceding claims, **characterized in that** the annular bearing elements (1, 2) have fastening means by means of which the latter is rotatably mounted between a drive unit and a force transducer and which serves for the friction-free transmission of the drive torque to be measured.

5. Cruciform spring element according to claim 4, **characterized in that** it is arranged according to the Coriolis principle between a drive shaft of an impeller and a force transducer of a bulk material mass flow measurement device.

## Revendications

1. Élément d'amortissement croisé constitué d'un deux éléments de paliers pouvant être tordus l'un par contre l'autre et au moins deux éléments de ressorts à lames (3, 4, 5, 6) se croisant transversalement par rapport à un axe de rotation (7), qui relient entre eux les deux éléments de paliers (1,2),
**caractérisé en ce que**
- les éléments de paliers (1, 2) sont conçus comme des éléments annulaires structurés et
- au moins deux paires de ressorts à lames (3, 4 ; 5, 6) existent, les éléments de ressorts à lames (3, 4, 5, 6) d'une direction radiale (8) correspondante sont disposées au moins par paires,
- les extrémités de chaque paire de ressorts à lames (3, 4, 5, 6) d'un côté sont fixées chacune à des éléments de paliers différents (1, 2) et cela en alternance avec le côté opposé, de façon à ce que le ressort à lame supérieur (3, 5) d'une paire de ressorts à lames soit fixé, avec son extrémité droite, à l'élément de palier supérieur (1) et, avec son extrémité gauche, à l'élément de palier inférieur (2) et le ressort à lame inférieur (4, 6) soit fixé, avec son extrémité droite, à l'élément de palier inférieur (2) et, avec son extrémité gauche, à l'élément de palier supérieur (1).

2. Élément d'amortissement croisé selon la revendication 1, **caractérisé en ce que** les éléments de paliers annulaires (1, 2) comprennent un bord de liaison (11) plat orienté vers l'extérieur pour la fixation de l'élément de torsion et comprennent une partie interne (12) échelonnée vers l'intérieur munie de saillies et d'évidements (13), qui s'emboîtent dans l'élément de palier (1, 2) opposé et comprennent au moins des surfaces axiales (9) pour la fixation des extrémités du ressort à lame.

3. Élément d'amortissement croisé selon l'une des revendications précédentes, **caractérisé en ce que** les éléments de paliers annulaires (1, 2) sont écartés entre eux axialement par des évidements (13) ou des fentes et permettent au moins un angle de torsion de 5° à 45° et sont reliés par des ressorts à lames (3, 4, 5, 6) plats et minces, les ressorts à lames (3, 4, 5, 6) étant flexibles dans la direction de rotation et rigides dans la direction de traction.

4. Élément d'amortissement croisé selon l'une des revendications précédentes, **caractérisé en ce que** les éléments de paliers annulaires (1, 2) comprennent des moyens de fixation à l'aide desquels celui-ci est logé de manière rotative entre un groupe d'entraînement et un capteur de force, et permet la transmission sans friction du couple d'entraînement à mesurer.

5. Élément d'amortissement croisé selon la revendication 4, **caractérisé en ce que** celui-ci est disposé entre un arbre d'entraînement d'une roue à aubes et un capteur de force d'un dispositif de mesure de débit massique de produit en vrac selon le principe de Coriolis.
